# EUROPEAN PATENT SPECIFICATION

(11) **EP 1 144 171 B1**
(45) Date of publication and mention of the grant of the patent: **26.05.2004**
(21) Application number: 00903028.9
(22) Date of filing: 19.01.2000
(51) Int. Cl.: B29B 17/00, C10C 3/12, E04D 7/00

(54) **METHOD AND APPARATUS FOR THE RECYCLING OF BITUMINOUS MATERIALS, MORE IN PARTICULAR OF BITUMINOUS ROOFING MATERIALS**
VERFAHREN UND VORRICHTUNG ZUR RÜCKGEWINNUNG VON BITUMINÖSEN MATERIALIEN, INSBESONDERE BITUMINÖSEN DACHABDECKUNGSMATERIALIEN
PROCEDE ET DISPOSITIF PERMETTANT DE RECYCLER DES MATERIAUX BITUMINEUX, NOTAMMENT DES MATERIAUX BITUMINEUX DE COUVERTURE

(30) Priority: 21.01.1999 NL 1011106
(43) Date of publication of application: 17.10.2001
(73) Proprietor: Dan Appels Engineering BV, 7313 CA Apeldoorn (NL)
(72) Inventor:
(74) Representative: Koomen, M.J.I.
(86) International application number: PCT/NL2000/000040
(87) International publication number: WO 2000/043184

(56) References cited:
- WO-A-97/36725
- WO-A-98/31519
- US-A- 4 330 340
- US-A- 5 622 103

## Description

The invention relates to a method according to the preamble of claim 1 and an apparatus according to the preamble of claim 4 for the recycling of bituminous materials, more in particular of bituminous roofing materials.

Such a method and apparatus are known from WO-A-9831519.

WO-A-9831519 teaches to recycle the waste of bituminous roofing materials, which are comprised of bitumen with possible inlaids such as polyester fleece or glass fleece or -fabric and such like, with slate chippings and such like, and with possible other components forming roofing materials such as adhering or not adhering insulation materials formed by polyurethane, polystyrene, mineral wool and such like, by heating the bituminous materials, in such a way that the bitumen component in the bituminous materials melts, after which the bitumen and the other components forming the roofing materials are separated from each other. After sorting, reducing and melting the material is sieved and sorted. The known method requires much energy and is rather cumbrous.

It is an object of the present invention to provide an improved method and apparatus for the recycling of bituminous materials.

Accordingly, the present invention provides a method and an apparatus as defined in claims 1 and 4 respectively.

Preferred embodiments are defined in the dependent claims.

With the method and apparatus according to the invention it is possible to recycle bituminous materials in a simple manner and to separate the bitumen from any possible inlaids such as polyester fleece or glass fleece or -fabric and such like, slate chippings and such like, and any possible other components forming roofcovering materials such as adhering or not adhering insulation materials formed by polyurethane, polystyrene, mineral wool and such like. It is thereby not necessary to first reduce or make the materials smaller.

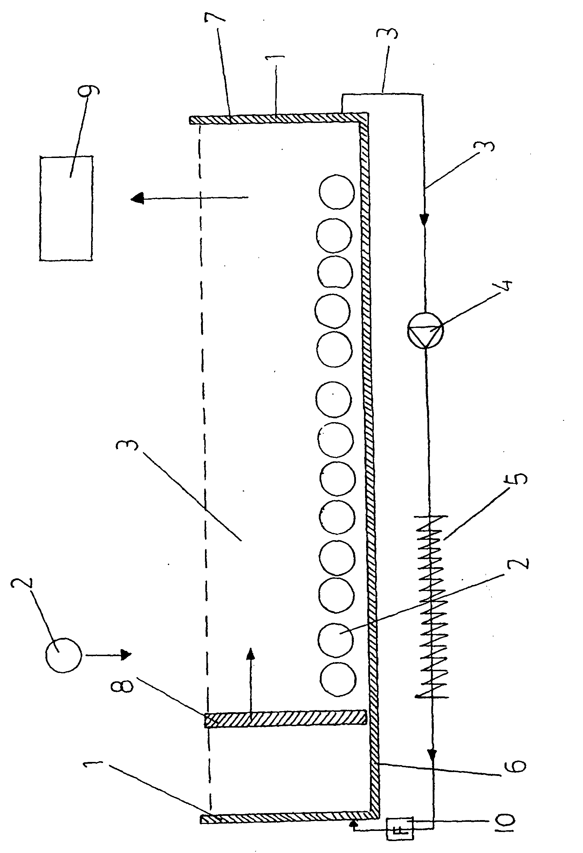

The invention will hereafter be described with reference to the drawing of an example of an embodiment.

In the figure a vessel for the recycling of bituminous roofing materials according to the invention is shown.

As can be seen in the figure, in a vessel 1 bituminous bands or rolls 2 are brought in, including the slate chippings, the inlaid and any possible adhering insulation materials. As melting medium a hot liquid bitumen 3 or hot fuel oil is used of circa 200 °C. The vessel is filled up to above the material.
The bitumen 3 is pumped round by means of the pump 4 and is lead at high speed along the bituminous rolls or roof bands that are to be recycled, whereby the bitumen of the roofcovering melts away in the melting medium. A filter 10 purifies the bitumen from any possible loosening slate chippings and roof dirt. After some time the rolls of waste material will be melted and the other components forming the roofcovering material, such as the inlaids, the tubes, the slate chippings, the insulation and such like, remain left.
By means of a double walled construction of the vessel or of the piping system extra energy may or has to be supplied by means of a hot oil circulation system 5.

In the vessel 1 further a plate 8 is present, which is movable over the bottom 6 in the vessel in the direction of a wall 7 of the vessel, which plate fits vertically in the cross section in the vessel. After the rolls 2 are put into the vessel 1 and after the melting of the bitumen component in the rolls the vessel is pumped empty. The residue of the rolls is pressed or pushed by the plate 8 in the direction of a wall 7 and is pressed to a block, practically without bitumen, of the tubes, the inlaids and the slate chippings.

This block can thereafter be hoisted out of the vessel and removed by means of a suitable device 9.
With the method and apparatus according to the invention it is possible to melt in one single step the bituminous waste materials such as the rolls and to strip the residue by means of the pressing together to a large extent and almost completely from adhering bitumen. This residue can be discharged and can for instance be burned in a waste processing plant because it contains little bitumen.

The measurements of the vessel can vary. The vessel can for instance have a measurement of 50 by 3 by 2 meters whereby the processing capacity is 50.000 tons of bituminous scrap waste per year. The capacity can be increased relatively cheap and simple by increasing the length of the vessel.

## Claims

1. Method for the recycling of bituminous materials comprising bitumen and other components, more in particular for the recycling of bituminous roofing materials made up of bitumen and any possible inlaids such as polyester fleece or glass fleece or -fabric and such like, and of slate chippings and such like and of possible other components forming roofing materials, such as adhering or not adhering insulation materials made up of polyurethane, polystyrene, mineral wool and such like, comprising bringing the bituminous materials into a vessel [1], melting the bitumen component in the bituminous materials in the vessel, and separating from each other the bitumen and the other components forming the bituminous materials, **characterized in that** the said other components are pressed or pushed together in the vessel.

2. Method according to claim 1, **characterized in that** the pushed or pressed together components are removed out of the vessel [1].

3. Method according to claim 2, **characterized in that** the pushed or pressed together components are lifted or hoisted out of the vessel [1].

4. Apparatus for applying the method according to one of the preceding claims, formed by a vessel [1] for receiving the bituminous materials [2], with means for the feeding of bitumen into and the feeding of bitumen out of the vessel, with means [4] for bringing the content into a flow and means [3] for heating the content, thereby melting the bitumen component in the bituminous materials and separating from each other the bitumen and the other components forming the bituminous materials, **characterized in that** the vessel [1] is provided with means for pushing or pressing the said other components in the vessel together.

5. Apparatus according to claim 4, **characterized in that** the press means are formed by a plate [8] which is movable in the vessel [1] over the bottom [6] in the direction of a wall [7] of the vessel, which plate [8] fits in cross section vertically in the vessel.

6. Apparatus according to claim 4 or 5, **characterized in that** means [9] are present for removing the components from the material that are pressed together out of the vessel.

7. Apparatus according to claim 6, **characterized in that** the means are formed by a device which is suitable for lifting or hoisting the components out of the vessel.

## Patentansprüche

1. Verfahren zur Rückgewinnung von bituminösen Materialien, umfassend Bitumen und andere Komponenten, insbesondere zur Rückgewinnung von bituminösen Dachabdeckungsmaterialien hergestellt aus Bitumen und möglichen Einlagen wie Polyestervlies oder Glasvlies oder - gewebe und dergleichen und von Schiefer und dergleichen und von möglichen anderen Komponenten die die Dachabdechungsmaterialien bilden, wie anhaftende oder nicht anhaftende Dämmstoffmaterialien hergestellt aus Polyurethan, Polystyren, minerale Wolle und dergleichen, umfassend die Eintragung der bituminösen Materialien in einen Behälter (1) und das in dem Behälter schmelzen von dem Bitumen in den bituminösen Materialien und das voneinander trennen des Bitumens und die anderen Komponenten die das bituminöse Material bilden, **dadurch gekennzeichnet, dass** die genannten anderen Komponenten zusammengepresst oder zusammengedrückt werden in dem Behälter.

2. Verfahren nach Anspruch 1, **dadurch gekennzeichnet, dass** die zusammengedrückten oder zusammengepressten Komponenten aus dem Behälter (1) entfernt werden.

3. Verfahren nach Anspruch 2, **dadurch gekennzeichnet dass** die zusammengedrückten oder zusammengepressten Komponenten aus dem Behälter (1) hochgehoben oder hochgezogen werden.

4. Vorrichtung fuer Anwendung des Verfahrens nach einer der vorgehenden Ansprüchen, bestehend aus einem Behälter (1) fuer die Aufnahme von den bituminösen Materialien (2) mit Mitteln fuer Zufuhr und Abfuhr des Bitumens , mit Mitteln (4) um den Inhalt in Strömung zu bringen und Mitteln (3) um den Inhalt zu erwärmen, wobei die bituminöse Komponente in den bituminösen Materialien geschmolzen wird und das voneinander trennen des Bitumens und der anderen Komponenten die die bituminösen Materialien bilden, **dadurch gekennzeichnet, dass** der Behälter versehen ist mit Mitteln fuer zusammendrücken oder zusammenpressen von den genannten Komponenten in dem Behälter.

5. Vorrichtung nach Anspruch 4 , **dadurch gekennzeichnet, dass** die Pressmittel gebildet werden von einer Platte, die bewegbar ist in dem Behälter über dem Boden (6), in Richtung von dem Wand (7) des Behälters, welche Platte (8 )in Querrichtung vertikal in dem Behälter passt.

6. Vorrichtung nach Anspruch 4 oder 5, **dadurch gekennzeichnet, dass** Mittel anwesend sind für die Entfernung der zusammengepressten Komponenten des Materials aus dem Behälter.

7. Vorrichtung nach Anspruch 6, **dadurch gekennzeichnet, dass** die Mittel gebildet werden von einer Vorrichtung die geeignet ist für hochheben oder hochziehen der Komponenten aus dem Behälter.

## Revendications

1. Procédé permettant le recyclage des matériaux bitumineux contenant du bitume et des autres composants et plus particulièrement, le recyclage des matériaux bitumineux pour toiture à base de bitume avec des incorporations éventuelles, telles que polyester non tissé, voile de verre ou fibre de verre, etc., avec un splitage de paillettes d'ardoise etc. et avec, le cas échéant, d'autres composants formant le matériau pour toiture, notamment des matériaux d'isolation attachés ou pas, à base de polyuréthane, de polystyrène, de laine minérale etc. comprenant le depot des matériaux bituminaux dans un bac (1), la dissolution dans ledit bac du bitume contenu dans les matériaux bitumineux et separant le bitume et les autres composants formant les matériaux bitumineux , **caractérisé par le fait que** desdits autres composants sont tassés ou compressés dans le bac.

2. Procédé selon la revendication 1, **caractérisé par le fait que** les composants compressés ou tassés sont enlevés du bac (1).

3. Procédé selon la revendication 2, **caractérisé par le fait que** les composants compressés ou tassés sont soulevés ou hissés du bac (1).

4. Dispositif permettant l'application du procédé selon l'une des revendications précédentes, constitué d'un bac (1) destiné à contenir les matériaux bitumineux (2), avec les moyens permettant le chargement et le déchargement du bitume, les moyens (4) permettant la mise en mouvement du contenu et les moyens(3) permettant son réchauffement, la dissolution dans ledit bac du bitume contenu dans les matériaux bitumineux, et la separation du bitume et des autres composants formant les matériaux bitumineux, est **caractérisé par le fait que** le bac (1) est pourvu des moyens permettant la compression ou le tassement des matériaux bitumineux.

5. Dispositif selon la revendication 4, **caractérisé par le fait que** les moyens de compression sont constitués d'une plaque (8), placée verticalement transversalement, qui se déplace dans le bac (1), sur le fond (6) dudit bac, vers l'une des parois (7) du bac en question.

6. Dispositif selon la revendication 4 ou 5, **caractérisé par** la présence de moyens (9) permettant l'enlèvement des composants comprimés du matériau hors du bac.

7. Dispositif selon la revendication 6, **caractérisé par le fait que** les moyens utilisés sont constitués d'un dispositif conçu pour permettre le levage ou le hissage des composants hors du bac.
